Europäisches Patentamt

European Patent Office

Office européen des brevets

(11) Veröffentlichungsnummer: **0 256 338 B1**

(12) **EUROPÄISCHE PATENTSCHRIFT**

(45) Veröffentlichungstag der Patentschrift: **11.03.92**

(51) Int. Cl.⁵: **A21B 5/00**

(21) Anmeldenummer: **87110567.2**

(22) Anmeldetag: **21.07.87**

(54) **Verfahren und Vorrichtung zum Wiedererwärmen und Fertigbacken von Lebensmitteln, insbesondere von Back- und Grillgut.**

(30) Priorität: **12.08.86 DE 3627332**
**09.01.87 DE 3700532**
**19.01.87 DE 3701366**

(43) Veröffentlichungstag der Anmeldung:
**24.02.88 Patentblatt 88/08**

(45) Bekanntmachung des Hinweises auf die
Patenterteilung:
**11.03.92 Patentblatt 92/11**

(84) Benannte Vertragsstaaten:
**AT BE CH DE ES FR GB GR IT LI LU NL SE**

(56) Entgegenhaltungen:
**EP-A- 0 251 947**     **FR-A- 2 492 223**
**GB-A- 1 142 650**     **US-A- 3 814 901**
**US-A- 4 039 776**     **US-A- 4 452 132**
**US-E- 28 292**

(73) Patentinhaber: **VAPORINA BACK- UND GE-
FRIERGERATE GMBH
Porschestrasse 4
W-7140 Ludwigsburg(DE)**

(72) Erfinder: **Kirchhoff, Ernst
Buchfinkenweg 1
W-3050 Wunstorf 1(DE)**

(74) Vertreter: **Liska, Horst, Dr.-Ing. et al
Patentanwälte H. Weickmann, Dr. K. Fincke,
F.A. Weickmann, B. Huber, Dr. H. Liska, Dr. J.
Prechtel Kopernikusstrasse 9 Postfach 86 08
20
W-8000 München 86(DE)**

## Beschreibung

Die Erfindung betrifft ein Verfahren und eine Vorrichtung zum Wiedererwärmen und Fertigbakken von Lebensmitteln, insbesondere von Back- und Grillgut.

Lebensmittel, insbesondere Back- und Fleischwaren verlieren beim Erwärmen Feuchtigkeit. Dies führt vor allem dann zu Problemen, wenn man Back- oder Grillwaren ein zweites Mal erhitzt oder halbfertige Waren fertigbackt. Die Lebensmittel sind nach dem 2. Erwärmen oder dem Fertigbakken trockener, als es bei frisch zubereiteten Lebensmitteln der Fall ist und sie verlieren an Qualität. Der Feuchtigkeitsverlust und damit der Qualitätsverlust ist umso größer, je länger die Erwärmung des Lebensmittels dauert. So ist beispielsweise bei Wiederaufbacken von tiefgefrorenen Lebensmitteln der Feuchtigkeitsverlust sehr hoch, da diese je nach Größe eine Erhitzungszeit von 30 Minuten und mehr erfordern. Da üblicherweise die Erwärmung von außen erfolgt, wird vor allen Dingen der Oberfläche des zu erwärmenden Gutes am stärksten Feuchtigkeit entzogen. Weiterhin wird, da die Hitze nur außen zugeführt wird, der Kern des Lebensmittels nur sehr langsam erwärmt, was zu langen Aufbackzeiten führt. Außerdem verkleinern sich bei Backwaren bereits nach einem Erhitzen von ca. 5 Minuten durch Austrocknen die Poren. Dies führt zu einer Volumenverkleinerung. Darüberhinaus werden wiedererwärmte Backwaren schnell altbacken.

Da insbesondere Lebensmittel, die tiefgefroren werden, lange Aufbackzeiten benötigen, daher stark austrocknen, wurde bereits zur Lösung dieses Problems vorgeschlagen, dem Lebensmittel vor dem Einfrieren Feuchtigkeit in Form von Wasser zuzuführen. So ist beispielsweise aus DE-OS 28 56 272 ein Verfahren bekannt, bei dem Backwaren vor dem Tiefgefriervorgang Wasser oder Wasserdampf injiziert wird. Nachteil dieses Verfahrens ist jedoch, daß bereits beim Wiederauftauen Feuchtigkeit entweicht und dann beim Aufbacken in etwa derselbe Zustand erreicht wird, wie nach den bisher bekannten Verfahren. Auch die Erwärmungszeit ist genauso lang, wie bei den sonst üblichen Verfahren.

Aus der US-PS 4,452,132 ist ein Dampferzeuger mit darüber gelegenem Dampfraum bekannt, bei dem der Dampf entweder über Dampfinjektionsnadeln in das Lebensmittel eingeführt wird, oder durch Umbau der Vorrichtung das Lebensmittel von außen bespült. Da hier ein Backofen fehlt, erfolgt das Erwärmen alleine durch den Dampf. Die durch die Erfindung beseitigten Nachteile bisheriger Aufwärmvorrichtungen lassen sich hierdurch nicht beseitigen. Außerdem neigen die Injektionsnadeln bei diesem Dampferzeuger zum Verstopfen.

Im US-Reissue-Patent 28 292 wird eine Platte zum Erwärmen von Lebensmitteln beschrieben, die Bohrungen aufweist durch die in bestimmter Weise vorgetrockneter Dampf von unten zugeführt wird. Hier ergeben sich die gleichen Nachteile, wie bei der Vorrichtung der obigen US-PS.

Es war nun Aufgabe der Erfindung, ein Verfahren und eine Vorrichtung zu schaffen, mit der es möglich ist, Lebensmittel schnell wieder aufzuwärmen bzw. fertig zu backen, ohne daß die erwähnten Qualitätsverluste auftreten. Eine weitere Aufgabe der Erfindung war es, eine Vorrichtung zu schaffen, bei der mit wenig Aufwand eine relativ geringe Menge Wasserdampf notwendig ist, um Lebensmittel aufzubacken.

Es war darüberhinaus Aufgabe der Erfindung, eine einfache Vorrichtung zur Verfügung zu stellen, die für übliche Herde und Backöfen geeignet ist.

Diese Aufgabe wird gelöst, durch ein Verfahren zum Wiedererwärmen und Fertigbacken von Lebensmitteln, insbesondere Back- und Grillgut, das dadurch gekennzeichnet ist, daß man direkt vor oder/und während des Aufwärmens bzw. Aufbakkens eine Mischung aus heißer Luft und Wasserdampf in das Innere des Lebensmittels einführt.

Das erfindungsgemäße Verfahren ermöglicht es, Lebensmittel sehr schnell zu erwärmen bzw. fertig zu backen. Durch die kurze Erwärmungszeit wird der Feuchtigkeitsverlust verringert. Gleichzeitig wird der Feuchtigkeitsverlust, der beim Aufbakken auftreten würde, ausgeglichen durch das Zuführen einer entsprechenden Menge Wasser in Form einer Mischung aus heißer Luft und Wasserdampf. Überraschenderweise ist es mit dem erfindungsgemäßen Verfahren möglich, Lebensmittel so zu erwärmen bzw. aufzubacken, daß ihre Qualität der von frischbereiteten Lebensmitteln entspricht. Insbesondere Backwaren werden nach dem erfindungsgemäßgen Wiedererwärmungs- bzw. Aufbackprozeß nicht so schnell altbacken, wie es bei dem üblichen Verfahren der Fall ist. Darüber hinaus wird die Erwärmungszeit sehr stark verkürzt auf einen Bruchteil der mit bekannten Verfahren benötigten Zeit. Je nach Größe des Lebensmittels verkürzt sich die Erwärmungszeit auf 1/10 bis die Hälfte der bisher notwendigen Zeit. Auf diese Weise werden außerdem noch Energiekosten gespart. In einer bevorzugten Ausführungsform der Erfindung ist es möglich, mit wenig Aufwand Lebensmittel zu erwärmen. Damit ist es möglich, relativ wenig Wasserdampf, vermischt mit heißer Luft, kontinuierlich in das Lebensmittel zu injizieren, wobei das Verhältnis von Wasserdampf und Luft je nach den Gegebenheiten leicht einstellbar ist.

Das erfindungsgemäße Verfahren eignet sich für alle Lebensmittel, die zum Verzehr entweder wiedererwärmt oder fertiggebacken werden müssen. Insbesondere ist das Verfahren geeignet für Back- und Grillgut. Geeignete Backwaren sind beispielsweise Brot, Semmeln und andere Kleinbackwaren und Kuchen, als Grillgut kommen insbesondere Würstchen und zum Grillen geeignete Fleischstücke, wie z.B. Hähnchen, Hamburger und mit Fleisch gefüllte Backwaren inbetracht. Es kann sowohl verwendet werden für das Wiederaufbacken von bereits vorgebackenem Back- und Grillgut als auch für das Fertigbacken von halb gebackenen Lebensmitteln. Das zu behandelnde Lebensmittel kann sich dazu auch in tiefgefrorener oder aufgetauter Form befinden.

Zur Durchführung des erfindungsgemäßen Verfahrens wird dem Inneren des zu behandelnden Lebensmittels direkt vor oder während des Wärmvorgangs für das Wiedererwärmen oder Fertigbacken eine Mischung aus heißer Luft und Wasserdampf, die auch als Backschwaden bezeichnet wird, zugeführt.

Dazu werden bevorzugt in das Lebensmittel eine oder mehrere Kanülen eingeführt, über die dann der Backschwaden eingeblasen wird. Das Injizieren von Backschwaden kann entweder direkt vor dem Erwärmen bzw. Aufbacken des Lebensmittels geschehen, wobei dann das anschließende Erwärmen in an sich bekannter Weise erfolgt. Diese Ausführungsform eignet sich besonders für Kleinbackwaren. Weiterhin kann das Injizieren auch während des Erhitzens erfolgen, so daß die Erwärmung von innen und außen gleichzeitig stattfindet. Dies ist insbesondere bevorzugt bei größeren Lebensmitteln. Eine Möglichkeit besteht darin, dem Lebensmittel Backschwaden zuerst direkt vor dem Erhitzen in Form eines Dampfstoßes einzublasen und dann eine weitere Menge Feuchtigkeit während des Erhitzungsvorganges zuzuführen. Die geeignete Zuführungsform richtet sich nach Art und Größe des zu erwärmenden Lebensmittels.

In einer bevorzugten Ausführungsform wird das erfindungsgemäße Verfahren so durchgeführt, daß zuerst dem Lebensmittel das Gemisch aus heißer Luft und Wasserdampf in Form eines Dampfstoßes zugeführt wird und anschließend das so behandelte Gut sofort im Backofen erhitzt wird.

In einer weiteren Ausführungsform wird dem Lebensmittel vor dem Erhitzen der Backschwaden über Düsen mit Druck eingeblasen.

Die Menge an in das Lebensmittel eingeführte Wasserdampf ist abgestimmt auf die Menge an Feuchtigkeit, die das Lebensmittel beim Erhitzen verliert. Dem Lebensmittel wird soviel Wasser zugeführt, wie bei einer Erhitzung unter denselben Bedingungen aber ohne Zuführung von Wasser verlorengehen würden.

Bevorzugt entspricht die eingeführte Menge an Wasserdampf 0,5 bis 5 % Wasser, bezogen auf das Gewicht des zu erhitzenden Lebensmittels. Besonders bevorzugt werden 1 bis 3 % Wasser eingeführt. Die jeweils Optimale Menge richtet sich nach der Art des Lebensmittels und kann durch einige wenige Versuche leicht bestimmt werden.

Sehr gute Ergebnisse werden erzielt, wenn dem Lebensmittel nicht nur die Menge an Wasserdampf innen zugeführt wird, die beim Erwärmen verloren geht, sondern wenn zusätzlich noch während des Wärmvorgangs das Lebensmittel im Backraum einer mit Feuchtigkeit angereicherten Luft ausgesetzt wird.

Gegenstand der Erfindung ist auch eine Vorrichtung zum Wiedererwärmen und/oder Fertigbacken von Lebensmitteln, bestehend aus einem Backofen, in dessen Backraum Backschwaden eines Backschwadenerzeugers einleitbar sind, die gekennzeichnet ist durch einen Backschwadenerzeuger, der als Durchlauferhitzer für Wasser ausgebildet ist und ein die Luft in den Wassererhitzungskreis einführendes Gebläse bzw. einen Kompressor umfaßt, und durch eine im Backraum angeordnete Injiziervorrichtung mittels der die Backschwaden in das Innere eines Lebensmittel einführbar sind.

Diese Vorrichtung enthält einen Backofen, in dem Lebensmittel in an sich bekannter Weise in einem Temperaturbereich von 0 bis 400 °C erwärmt werden können. Die Erwärmung kann z.B. durch ein Heiß-Luft-Gebläse, Mikrowellen, Infrarotwellen und andere Strahlungswärme erfolgen. Die Temperatur ist in an sich bekannter Form regelbar. Der Backraum kann durch eine oder mehrere Back- bzw. Grillauflagen unterteilt sein. Mit dem Backofen ist eine als Backschwadenerzeuger bezeichnete Vorrichtung zur Erzeugung einer Mischung aus heißer Luft und Wasserdampf verbunden.

Dieser Backschwadenerzeuger ist als Durchlauferhitzer für Wasser ausgebildet und umfaßt ein die Luft in den Wassererhitzungskreis einführendes Gebläse. Der Durchlauferhitzer wird von einem Wasserbehälter gespeist. Bevorzugt befindet sich in der Wasserzuführungsleitung des Durchlauferhitzers eine Dosiereinrichtung, insbesondere eine Dosierpumpe, mit deren Hilfe die jeweils benötigte Wassermenge justiert werden kann.

Aus Gründen der Energieersparnis ist es besonders bevorzugt, die heiße Luft, die für den Backschwaden über das Gebläse in den Wassererhitzungskreis des Durchlauferhitzers eingeführt wird, aus dem Backraum anzusaugen. Weiterhin befindet sich an dem Backschwadenerzeuger eine Injiziervorrichtung.

In einer weiteren bevorzugten Ausführungsform umfaßt der Backschwadenerzeuger einen Vorerhitzer, der Dampf erzeugt und einen als Mischkammer ausgebildeten, den Luftanteil des Dampfs erhöhenden Nacherhitzer. Bevorzugt wird der im Vorerhitzer erzeugte Dampf über eine Düse in die Mischkammer eingeführt. Der Vorerhitzer ist bevorzugt als Durchlauferhitzer ausgebildet. Der Durchlauferhitzer wird von einem Wasserbehälter gespeist. Bevorzugt befindet sich in der Wasserzuführungsleitung des Durchlauferhitzers eine Dosiereinrichtung, insbesondere eine Dosierpumpe, mit deren Hilfe die jeweils benötigte Wassermenge justiert werden kann. Die Menge an Wasserdampf wird abgestimmt auf die Menge, die in das Lebensmittel eingeführt werden soll.

Der als Mischkammer ausgebildete Nacherhitzer kann jede geeignete Form haben. Zweckmäßigerweise liegt er ebenfalls in Form eines Durchlauferhitzers vor. Bevorzugt ist die Mischkammer als Rohr ausgebildet, in das die den Dampf aus dem Vorerhitzer leitende Düse mündet. In einer besonders bevorzugten Ausführungsform ist die Mischkammer ein gekrümmtes Rohr, das von außen beheizt wird.

Die Mischkammer ist bevorzugt so ausgebildet, daß sie einen Stauraum bildet, so daß der impulsartig in den als Mischkammer ausgebildeten Nacherhitzer eingeführte Dampf zusammen mit dem Luftanteil kontinuierlich den Nacherhitzer verläßt. Bevorzugt befindet sich dazu in dem Rohr in Strömungsrichtung des Dampfes stromabwärts eine Drossel.

Weiterhin befindet sich an dem der Düse zugewandten Ende des Nacherhitzers ein Luftzuführweg, der bevorzugt als Leitung oder in Form eines Rohres ausgebildet ist. Wenn die Mischkammer als Rohr ausgebildet ist, ist der Luftzuführweg bevorzugt eine Verlängerung des Nacherhitzerrohres. Vorzugsweise ist in dem Luftzuführweg der Düse ein Rückschlagventil vorgeschaltet. Der Dampf aus dem Vorerhitzer strömt durch die Düse, die einen kleinen Querschnitt hat in den Nacherhitzer, dessen Querschnitt größer ist und der bevorzugt als Rohr ausgebildet ist. Dadurch entsteht, wie bei einer Wasserstrahlpumpe, ein Unterdruck, wodurch über den Luftzuführweg Luft angesaugt wird. Bevorzugt endet der Luftzuführweg in dem Backraum, so daß die angesaugte Luft warm ist und im wesentlichen kein Wasser kondensieren kann.

Zur Regulierung der Luftzufuhr befindet sich bevorzugt in dem Luftzuführweg ein Stellglied. In einer weiteren bevorzugten Ausführungsform ist der Luftzuführweg an ein Gebläse oder einen Kompressor angeschlossen, der warme Luft dosiert aus dem Backofen ansaugt und in den Luftzuführweg führt.

An den Nacherhitzer ist weiterhin eine Injiziervorrichtung angeschlossen, mittels der die Backschwaden in das Innere eines Lebensmittels einführbar sind.

Die an dem erfindungsgemäßen Backschwadenerzeuger befindliche Injiziervorrichtung, mittels der die Backschwaden in das Innere eines Lebensmittels einführbar sind, ist so ausgebildet, daß sie in ein Lebensmittel eingeführt werden kann. Dazu geeignet ist eine Kanüle, die eine oder mehrere Öffnungen hat. Bevorzugt sind die Öffnungen über den Mantel der Kanüle verteilt. Insbesondere bevorzugt ist es, daß die Mantelöffnungen in Umfangs- und Längsrichtung verteilt sind. Die Injiziervorrichtung kann aus einer oder mehreren Kanülen bestehen, wobei die Kanülen gegebenenfalls zu Gruppen zusammengefaßt sein können.

Wenn die Injiziervorrichtung eine Gruppe von Kanülen umfaßt, ist es wünschenswert, daß jeweils so viele Kanülen mit Backschwaden beschickt werden, wie gerade benötigt werden. Daher ist, wenn die Injiziervorrichtung mehrere Kanülen umfaßt, wenigstens eine über ein Regulierventil an den Backschwadenerzeuger angeschlossen. Weiterhin können auch mehrere Gruppen von Kanülen jeweils über Ventile regulierbar an den Backschwadenerzeuger angeschlossen sein, um für den jeweiligen Verwendungszweck die optimale Zahl von Kanülen verwenden zu können.

In einer bevorzugten Ausführungsform weist die Injiziervorrichtung eine Sammelleitung in Form eines Ringrohres oder eines Doppelplattenkanals auf. Von dieser Sammelleitung gehen dann zwei oder mehr Kanülen aus. Die Kanülen stehen dabei vorzugsweise senkrecht von der Sammelleitung ab. Bei dieser bevorzugten Injiziervorrichtung kann entweder auf jede Kanüle ein Lebensmittel aufgesteckt werden, oder aber, wenn es sich um ein größeres Lebensmittel handelt, kann ein Lebensmittel auf mehrere Kanülen aufgesteckt werden. Diese Ausführungsform ist insbesondere geeignet für Blechkuchen.

Da es günstig ist, wenn das Lebensmittel während des Wärmvorganges auch außen von feuchter Luft umgeben ist, kann an den Backschwadenerzeuger auch eine Leitung angeschlossen sein, die parallel zu der Injiziervorrichtung in den Backraum mündet. Um die Menge an Backschwaden, die über die Injiziervorrichtung bzw. über die Backraumleitung zugeführt wird, zu regulieren, ist entweder in der Backraumleitung oder in der Leitung, die zu der Injiziervorrichtung führt, oder in beiden Leitungen ein Regulierventil angeordnet. Über das oder die Regulierventile kann dann der Backschwaden auch so reguliert werden, daß vor dem Wärmvorgang der Backschwaden in das Lebensmittel geleitet wird und während des Wärmvorganges dann in den Backraum. Ebenso ist es auch möglich, während des Wärmvorganges den Backschwaden sowohl in das Lebensmittel als auch in den Backraum zu leiten.

Die Anzahl der verwendeten Kanülen hängt ab von der Größe des zu erhitzenden Gutes. Für Kleinbackwaren und kleineres Grillgut genügt eine Kanüle, für größere Produkte ist es vorteilhaft, mehrere Kanülen zu verwenden. Da das Lebensmittel durch das Einführen von heißen Backschwaden auch von innen erwärmt wird, sind weitaus geringere Erhitzungszeiten notwendig, als bei den herkömmlichen Verfahren erforderlich sind. Dies hat zum einem den Vorteil, daß Energie eingespart wird und zum anderen, daß die negative Beeinflussung der Qualität während des Erhitzungsvorganges vermindert wird. Da weiterhin der Wasserverlust während des Erhitzens durch das Injizieren von Backschwaden ausgeglichen wird, werden mit der erfindungsgemäßen Vorrichtung und dem erfindungsgemäßen Verfahren Lebensmittel mit ausgezeichneter Qualität erhalten. Mit dem erfindungsgemäßen Verfahren können Kleinbackwaren innerhalb von 2 bis 3 Minuten aufgebacken werden. Auch für Fleisch und mit Fleisch gefüllte Backwaren eignen sich das Verfahren und die Vorrichtung der Erfindung vorzüglich. So können, z.B. Fastfood- Artikel wie Hamburger schnell und ohne Qualitätsverlust aufgebacken werden.

In einer weiteren bevorzugten Ausführungsform der erfindungsgemäßen Vorrichtung zum Wiedererwärmen und Fertigbacken von Lebensmitteln ist der Backschwadenerzeuger als mit einem Deckelteil verschließbares Gefäß ausgebildet ist, dessen Innenraum mit einer an dem Gefäß gehaltenen, nach oben abstehenden Kanüle verbunden ist.

In dieser Ausführungsform umfaßt der Backschwadenerzeuger ein mit einem Deckelteil verschließbares Gefäß. Das Gefäß dient zur Aufnahme von Wasser. Der Deckel verschließt das Gefäß relativ dicht. Bevorzugt befindet sich dazu zwischen Deckel und Gefäß eine Dichtung.

Bevorzugt ist das Gefäß so ausgebildet, daß der Durchmesser des Gefäßbodens ein Mehrfaches, besonders bevorzugt das 2 bis 10 fache, der Höhe des Innenraums des Gefäßes beträgt. Wird das Gefäß mit Wasser gefüllt und einer Wärmequelle ausgesetzt, so erwärmt sich aufgrund der großen Fläche, die mit dem Gefäßboden in Kontakt ist, der Inhalt besonders schnell. Damit können Zeit und Energie beim Aufbacken gespart werden.

Der Deckel des Gefäßes weist bevorzugt eine Innenwölbung auf, sodaß der über dem Innenraum des Gefäßteils sich bildende Luftraum vergrößert wird. Auf diese Weise wird erreicht, daß bei der sich bei der Erhitzung des Wassers bildende Dampf mit der vorhandenen Luft ein Gemisch bildet. Ein derartiges, auch als Backschwaden bezeichnetes Gemisch ist besonders gut zur Erwärmung von Lebensmitteln geeignet. Darüberhinaus wird mit dieser Ausführungsform erreicht, daß eine optimale Füllhöhe vorgegeben werden kann und trotzdem noch genügend Luft in dem Gefäß zur Verfügung steht.

Der Innenraum des Gefäßes ist mit einer als Kanüle ausgebildeten Injiziervorrichtung verbunden. Diese Kanüle ist an dem Gefäß gehalten und steht nach oben ab. Die Kanüle dient dazu, den in dem Gefäß erzeugten Dampf in das zu behandelnde Lebensmittel einzuführen. Bevorzugt ist die Kanüle an dem Deckelteil befestigt. Die Kanüle hat eine oder mehrere Öffnungen. Bevorzugt sind die Öffnungen über den Mantel der Kanüle verteilt. Insbesondere bevorzugt ist es, daß die Mantelöffnungen in Umfangs- und Längsrichtung verteilt sind. Die erfindungsgemäße Vorrichtung dient zur Erzeugung von Dampf. Beim Erhitzen des in dem Gefäß enthaltenen Wassers entsteht Dampf, der durch die Kanüle entweichen kann. Der entweichende Wasserdampf enthält je nach Zeitdauer eine mehr oder minder große Menge an Luft.

Das zu behandelnde Lebensmittel wird auf die Kanüle aufgesteckt und durch den Dampf erwärmt. Die Menge an Wasserdampf, die in das Lebensmittel eingeführt wird, ist abgestimmt auf die Menge an Feuchtigkeit, die das Lebensmittel beim Erhitzen verliert. Dem Lebensmittel wird so viel Wasser zugeführt, wie bei einer Erhitzung unter denselben Bedingungen, aber ohne Zuführung von Wasser, verlorengehen würden. Bevorzugt entspricht die eingeführte Menge an Wasserdampf 0,5 bis 5 % Wasser, bezogen auf das Gewicht des zu erhitzenden Lebensmittels. Besonders bevorzugt werden 1 bis 3 % Wasser eingeführt. Die jeweils optimale Menge richtet sich nach der Art des Lebensmittels und kann durch einige wenige Versuche leicht bestimmt werden.

Die Wassermenge, die in das Lebensmittel eingeführt wird, wird reguliert über die Wassermenge in dem Behältnis und über die Backzeit.

Die für die Dampferzeugung erforderliche Hitze kann dem Gefäß in direkter oder indirekter Weise zugeführt werden. Die erforderliche Hitze kann in einem Backgerät z. B. durch ein Heißluftgebläse, Mikrowellen, Infrarotwellen und andere Strahlungswärme geliefert werden. Bevorzugt wird das Gefäß im Backofen oder auf der Herdplatte erwärmt. Erfolgt die Erwärmung auf der Herdplatte, so wird das Gefäß gegebenenfalls noch mit einer Haube abgedeckt. Besonders bevorzugt erfolgt die Erwärmung im Backofen, da das Lebensmittel dann sowohl von außen als auch durch den erzeugten Dampf von innen erwärmt wird und dadurch die Erwärmungszeit sehr kurz gehalten werden kann, was zu qualitativ hochwertigen Produkten führt. Das erfindungsgemäße Gefäß kann in allen handelsüblichen Backöfen und auf üblichen Kochplatten verwendet werden.

Um mehrere Kleinbackwaren gleichzeitig oder größere Backwaren schnell aufzuwärmen, können mehrere Gefäße zu einem Verband zusammengefaßt werden bzw. in einem Rahmen zusammengehalten werden. Bevorzugt werden mehrere Gefäße durch einen Rahmen gehalten. Besonders bevorzugt werden dazu mehrere Gefäße auf einem Backblech oder einer Backschale zusammengefaßt.

Der Deckel des Gefäßes hat bevorzugt im Abstand von der Kanüle Stege, die dazu dienen, das Lebensmittel zu tragen, so daß es nicht auf dem Deckel aufliegt.

Das Gefäß wird mit Wasser gefüllt und mit dem Deckel verschlossen. Dann wird es entweder im Backofen oder auf einer Kochplatte oder durch andere geeignete Heizvorrichtungen erhitzt. Da das Behältnis verschlossen ist, entweicht der entstehende Dampf durch die Kanüle, auf die das Lebensmittel aufgesteckt wird. Am Anfang reißt der Dampf die in dem Behältnis enthaltene Luft mit, mit der Zeit nimmt der Gehalt an Wasserdampf zu und der Gehalt an Luft ab.

Erfindungsgemäß wird eine Vorrichtung zur Verfügung gestellt, die es ohne großen Aufwand gestattet, Lebensmittel zu erwärmen. Mit der erfindungsgemäßen Vorrichtung können Kleinbackwaren innerhalb von 2 bis 3 Minuten aufgebacken werden. Besonders geeignet ist die Vorrichtung für Backwaren, die eingefroren sind, wie beispielsweise Semmeln, Kuchen usw. und für halbgebackene Backwaren, wie halbfertiges Weißbrot. Auch für Fleisch und mit Fleisch gefüllte Backwaren eignet sich die Vorrichtung der Erfindung vorzüglich. So können z. B. Fast-Food-Artikel wie Hamburger, schnell und ohne Qualitätsverlust aufgebacken werden.

Die Zeichnungen zeigen bevorzugte Ausführungsformen der erfindungsgemäßen Vorrichtung.

Fig. 1    zeigt eine schematische Darstellung einer Vorrichtung zum Wiedererwärmen und/oder Fertigbacken von Lebensmitteln.

Fig. 2    zeigt in Seitenansicht eine schematische Darstellung einer Injiziervorrichtung als Ringrohr.

Fig. 3    zeigt in Draufsicht eine schematische Darstellung einer Injiziervorrichtung als Doppelplattenkanal.

Fig. 4    zeigt eine schematische Darstellung einer Vorrichtung zum Wiedererwärmen und/oder Fertigbacken von Lebensmitteln.

Fig. 5    zeigt eine schematische Darstellung der erfindungsgemäßen Vorrichtung.

Fig. 6    zeigt ein System mehrerer erfindungsgemäßer Vorrichtungen, die in einem Backblech zusammengehalten werden.

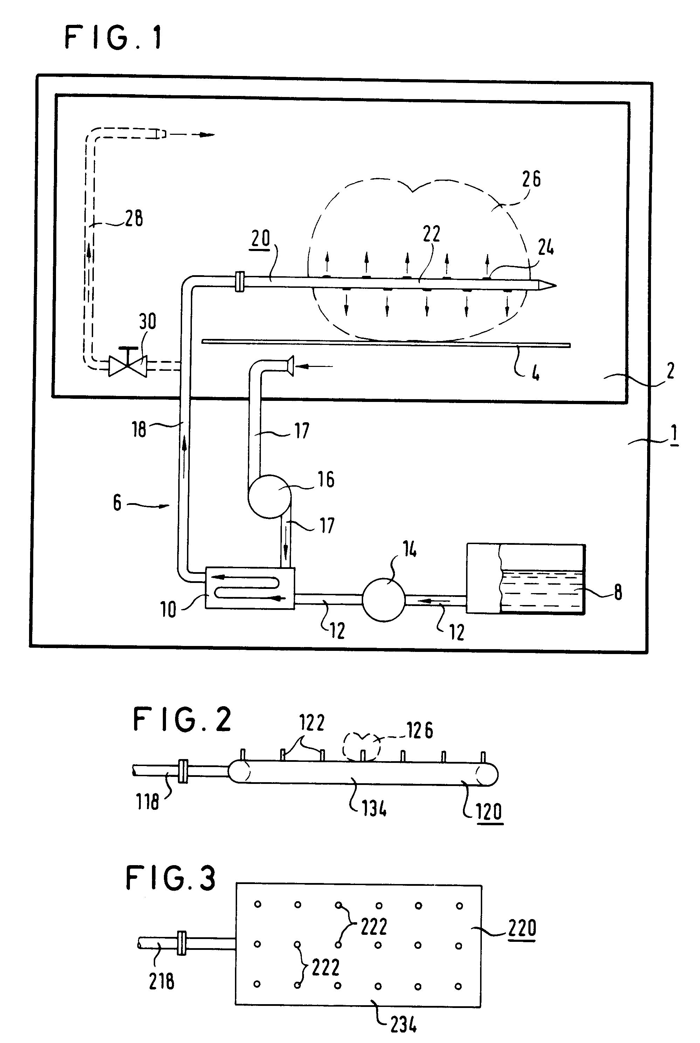

Fig. 1 zeigt einen Backofen 1 mit einem in üblicher Weise beheizbaren Backraum 2, dessen Temperatur im Bereich von 0 bis 400 °C regelbar ist. In dem Backraum 2 befindet sich ein Auflagegrill 4. Verbunden mit dem Backofen 1 ist ein Backschwadenerzeuger 6. Dieser besteht aus einem Wasserbehälter 8, der mit einem Durchlauferhitzer 10 zur Erzeugung von Wasserdampf über eine Wasserleitung 12 verbunden ist. In der Wasserleitung 12 befindet sich eine Dosierpumpe 14 zur Regulierung der jeweils benötigten Wassermenge. In den Durchlauferhitzer 10 mündet weiterhin ein Gebläse 16, das den Luftanteil für das Gemisch liefert. Das Gebläse 16 saugt über die Leitung 17 Luft aus dem Backraum 2 an.

Die in dem Backschwadenerzeuger erzeugte Mischung aus heißer Luft und Wasserdampf wird über die Backschwadenleitung 18 in die Vorrichtung zum Injizieren 20 geführt. Die Vorrichtung zum Injizieren 20 besteht aus einer Kanüle 22 mit über den Umfang und in Längsrichtung verteilten Mantelöffnungen 24. Auf diese Kanüle 22 ist als Lebensmittel eine Semmel 26 aufgesteckt.

In dem Durchlauferhitzer 10 wird Wasserdampf erzeugt, der durch das Gebläse 16 mit Luft vermischt wird. Der so erzeugte Backschwaden wird über die Backschwadenleitung 18 und die Injiziervorrichtung 20 geleitet. Der Backschwaden tritt aus den Mantelöffnungen 24 der Kanüle 22 aus und wird in das auf die Injiziervorrichtung 20 aufgesteckte Lebensmittel 22 geführt. Gleichzeitig wird das Lebensmittel in dem Backraum von außen erwärmt.

Die in Fig. 1 beschriebene Ausführungsform ist ein in dem Backofen 2 benutzbarer Backschwadenerzeuger 6 mit Injiziervorrichtung 20. Diese in Fig. 1 beschriebene Vorrichtung zur Erzeugung von Backschwaden kann weiterhin eine zusätzliche Leitung 28 (gestrichelt dargestellt) parallel zu der Injiziervorrichtung 20, welche Backschwaden in den Backraum 2 führt, aufweisen. In der Leitung 28 befindet sich zur Regulierung des Anteils an Backschwaden ein Regulierventil 30.

Das Lebensmittel wird über die Kanüle von innen mit Backschwaden beschickt. Gleichzeitig wird während des Wärmvorgangs im Backraum des Backofens über die Backraumleitung feuchte Luft in den Backraum geführt. Auf diese Weise werden die Feuchtigkeitsverluste minimal gehalten und gleichzeitig wird bei dem Wärmvorgang das nach außen verdunstende Wasser durch innen zugeführte Feuchtigkeit ersetzt. Das auf diese Weise aufgewärmte Lebensmittel hat so nach dem Wiedererwärmen eine Qualität, die der von frischbereiteten Lebensmitteln entspricht. Außerdem wird der Wärmvorgang sehr stark abgekürzt.

Fig. 2 zeigt eine bevorzugte Ausführungsform der in Fig. 1 dargestellten Injiziervorrichtung. Gleichwirkende Teile sind mit den Bezugszahlen aus Fig. 1, jeweils um die Zahl 100 erhöht, benannt. Die Injiziervorrichtung 120 ist hier als Sammelleitung ausgebildet, die die Form eines Ringrohres 134 hat. Von dem Ringrohr 134 stehen senkrecht Kanülen 122 ab. Auf diese senkrecht abstehenden Kanülen 122 kann dann ein Lebensmittel aufgesteckt werden.

Fig. 3 zeigt eine weitere Ausführungsform der Injiziervorrichtung von Fig. 1. Gleichwirkende Teile sind mit den Bezugszahlen aus Fig. 1, jeweils um die Zahl 200 erhöht, benannt. Hier ist die Injiziervorrichtung 220 als Sammelleitung in Form eines Doppelplattenkanals 234 ausgebildet, von dem mehrere Kanülen 222 senkrecht abstehen. Diese Ausführungsform ist insbesondere geeignet für größere Lebensmittel, die auf mehrere Kanülen 222 aufgesteckt werden können.

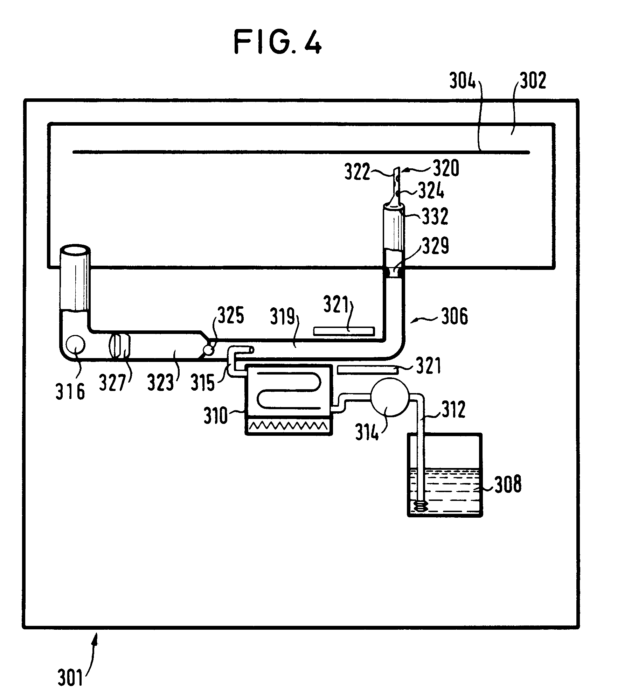

Fig. 4 zeigt eine weitere Ausführungsform eines Backschwadenerzeugers. Gleichwirkende Teile sind mit den Bezugszahlen aus Fig. 1, jeweils um die Zahl 300 erhöht, benannt.

Fig. 4 zeigt einen Backofen 301 mit einem in üblicher Weise beheizbaren Backraum 302, dessen Temperatur im Bereich von 0 bis 400°C regelbar ist. In dem Backraum 302 befindet sich ein Auflagerost 304. Verbunden mit dem Backraum 302 ist ein Backschwadenerzeuger 306. Dieser besteht aus einem Wasserbehälter 308, der mit einem Vorerhitzer 310 zur Erzeugung von Wasserdampf über eine Wasserleitung 312 verbunden ist. In der Wasserleitung 312 befindet sich eine Dosierpumpe 314 zur Regulierung der jeweils benötigten Wassermenge. Mit dem Durchlauferhitzer 310 ist eine Düse 315 verbunden, die den im Vorerhitzer 310 erzeugten Dampf in einen Nacherhitzer 319 sprüht. Der Nacherhitzer 319, der über eine Heizvorrichtung 321 beheizt wird, ist mit einer Luftzuführung 323 über ein Rückschlagventil 325 verbunden. Der Luftzuführweg 323 ist an ein Gebläse 316 angeschlossen. Das Gebläse 316 kann gegebenenfalls durch einen Kompressor ersetzt werden. An der Luftzuführung 323 befindet sich ein Stellglied 327 zur Regulierung der jeweils benötigten Luftmenge. An dem der Düse 315 abgewandten Ende des Nacherhitzers 319 befindet sich eine Drossel 329. Das der Düse abgewandte Ende 332 des Nacherhitzers 319 ist mit einer Injiziervorrichtung 320 verbunden. Die Injiziervorrichtung 320 besteht aus einer Kanüle 322 mit über den Umfang und in Längsrichtung verteilten Mantelöffnungen 324.

In dem Durchlauferhitzer 310 wird Wasserdampf erzeugt, der durch die Düse 315 in den Nacherhitzer 319 geleitet wird. Durch den beim Einsprühen des Wasserdampfes entstehenden Unterdruck wird über das Rückschlagventil 325 und die Luftzuführung 323 heiße Luft in den Nacherhitzer 319 gesaugt und mit dem Dampf vermischt. Der Nacherhitzer 319 ist als Mischkammer ausgebildet und bildet durch die Drossel 329 einen Stauraum, so daß der Nacherhitzer 319 über die Injiziervorrichtung 320 gleichmäßig das Dampf-/Luftgemisch abgibt, obwohl aus dem Vorerhitzer der Dampf impulsartig entweicht.

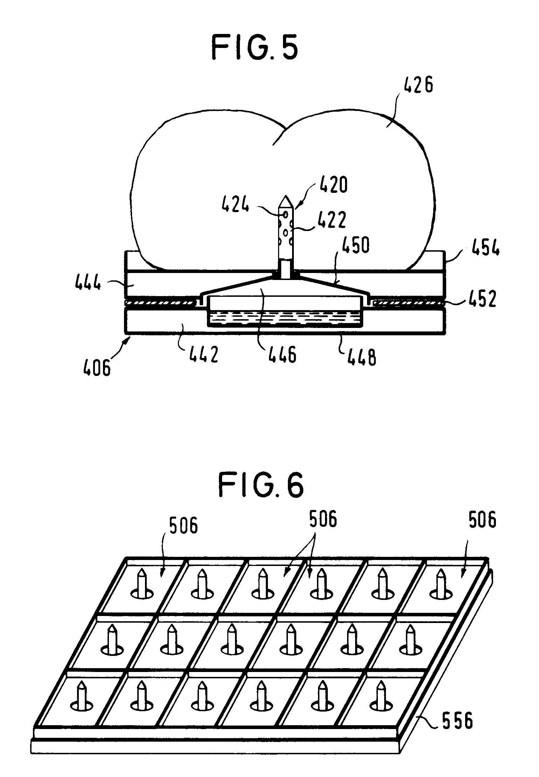

Fig. 5 zeigt eine besonders einfache Ausführungsform der Vorrichtung zur Erzeugung von Backschwaden. Auch hier sind gleichwirkende Teile mit den Bezugszahlen aus Fig. 1, jeweils um die Zahl 400 erhöht, benannt. Der Backschwadenerzeuger 406 besteht aus einem Gefäß 442, das mit einem Deckel 444 verschließbar ist. Die Höhe des Innenraums 446 beträgt in etwa das Fünffache des Durchmessers des Gefäßbodens 448. Der Innenraum 446 des Gefäßes 442 ist mit einer als Kanüle 422 ausgebildeten Injiziervorrichtung verbunden. Die Kanüle 422 ist an dem Deckelteil 444 befestigt. Der Deckelteil 444 weist eine Innenwölbung 450 auf. Die Kanüle 422 weist über den Umfang und in Längsrichtung verteilte Mantelöffnungen 424 auf. Zwischen Deckel 444 und Gefäß 442 befindet sich eine Dichtung 452. Auf dem Deckel 444 sind Stege 454 angeordnet, die das zu behandelnde Lebensmittel 426 halten. Der Innenraum 446 des Gefäßes 442 ist mit Wasser gefüllt. Wird die Vorrichtung erhitzt, so fängt das Wasser in dem Gefäß 442 zu sieden an und der entstehende Dampf entweicht durch die Kanüle 422 und erwärmt das auf die Kanüle aufgesteckte Lebensmittel 426 von innen.

Fig. 6 zeigt eine Kombination mehrerer Backschwadenerzeuger gemäß Fig. 5.

Fig. 6 zeigt ein Backblech 556, das eine Vielzahl von erfindungsgemäßen Vorrichtungen 506 zu einem Verband zusammengefaßt enthält. Auf dieses Verbandsystem können größere Lebensmittel oder eine Vielzahl von Kleinbackwaren aufgesteckt werden.

## Patentansprüche

1. Verfahren zum Wiedererwärmen und/oder Fertigbacken von Lebensmitteln, insbesondere Back- oder Grillgut,
   **dadurch gekennzeichnet,** daß man direkt vor und/oder während des Aufwärmens oder Aufbackens eine Mischung aus heißer Luft und Wasserdampf in das Innere des Lebensmittels einführt.

2. Verfahren nach Anspruch 1, **dadurch gekennzeichnet,** daß die Lebensmittel gleichzeitig mit dem Einführen der Luft-Wasserdampf-Mischung oder danach auch von außen einer Mischung aus heißer Luft oder Wasserdampf ausgesetzt werden.

3. Verfahren nach Anspruch 1 oder 2, **dadurch gekennzeichnet,** daß man das Verhältnis von Wasserdampf zu heißer Luft so einstellt, daß dem Lebensmittel soviel Wasserdampf innen zugeführt wird, wie beim Erhitzen verloren geht.

4. Verfahren nach einen der vorhergehenden Ansprüche,

**dadurch gekennzeichnet,** daß man 0,5 bis 5% Wasser, bezogen auf das Gewicht des zu erwärmenden Lebensmittels in das Lebensmittel einführt.

5. Verfahren nach einem der vorhergehenden Ansprüche,
   **dadurch gekennzeichnet,** daß man das Gemisch aus heißer Luft und Wasserdampf in Form eines Dampfstoßes dem Lebensmittel zuführt und das Lebensmittel anschließend erwärmt.

6. Verfahren nach einem der Ansprüche 1 bis 4,
   **dadurch gekennzeichnet,** daß man die Mischung aus heißer Luft und Wasserdampf über Düsen mit Druck in das Lebensmittel einbläst.

7. Vorrichtung zum Wiedererwärmen und/oder Fertigbacken von Lebensmitteln bestehend aus einem Backofen (1;301) in dessen Backraum (2;302) Backschwaden eines Backschwadenerzeugers (6;206;406) einleitbar sind,
   **gekennzeichnet durch,** einen Backschwadenerzeuger (6; 206; 406), der als Durchlauferhitzer (10; 310) für Wasser ausgebildet ist und ein die Luft in den Wassererhitzungskreis einführendes Gebläse bzw. einen Kompressor (16; 316) umfaßt, und durch eine im Backraum (2; 302) angeordnete Injiziervorrichtung (20; 120; 220; 320; 420) mittels der die Backschwaden in das Innere eines Lebensmittels einführbar sind.

8. Vorrichtung nach Anspruch 7,
   **dadurch gekennzeichnet,** daß an den Backschwadenerzeuger (6) eine Leitung (28) angeschlossen ist, die parallel zu der Injiziervorrichtung (20) in den Backraum (2) mündet und daß diese Leitung (28) und/oder die Injiziervorrichtung (20) ein Regulierventil (30) aufweist.

9. Vorrichtung nach Anspruch 7,
   **dadurch gekennzeichnet,** daß der Backschwadenerzeuger (306) einen Vorerhitzer (310), der Dampf erzeugt, und einen als Mischkammer ausgebildeten, den Luftanteil des Dampfs erhöhenden Nacherhitzer (319) umfaßt.

10. Vorrichtung nach Anspruch 9, **dadurch gekennzeichnet,** daß der Vorerhitzer (310) an eine in der Mischkammer (319) mündende Düse (315) angeschlossen ist.

11. Vorrichtung nach Anspruch 10,
    **dadurch gekennzeichnet,** daß die Düse (315) im Luftzuführweg (323) der Mischkammer (319) angeordnet ist.

12. Vorrichtung nach Anspruch 7,
    **dadurch gekennzeichnet,** daß der Backschwadenerzeuger (406) als mit einem Deckelteil (404) verschließbares Gefäß (442) ausgebildet ist, dessen Innenraum (446) mit einer von dem Gefäß (442) gehaltenen, nach oben abstehenden Kanüle (422) verbunden ist.

13. Vorrichtung nach Anspruch 12,
    **dadurch gekennzeichnet,** daß mehrere Backschwadenerzeuger (406) in einem Rahmen zusammengehalten werden.

14. Vorrichtung nach einem der Ansprüche 7 bis 13,
    **dadurch gekennzeichnet,** daß die Injiziervorrichtung (20; 120; 220; 320; 420) mindestens eine Kanüle (22; 122; 222; 322; 422) mit mehreren Mantelöffnungen (24; 124; 224; 324; 424) insbesondere mit mehreren in Längsrichtung verteilten Mantelöffnungen aufweist.

15. Vorrichtung nach einem der Ansprüche 7 bis 14,
    **dadurch gekennzeichnet,** daß die Injiziervorrichtung (20; 120; 220; 320) mehrere Kanülen (22; 122; 222; 322) umfaßt, von denen wenigstens eine über ein Regulierventil an den Backschwadenerzeuger (6; 306) angeschlossen ist.

16. Vorrichtung nach einem der Ansprüche 7 bis 14,
    **dadurch gekennzeichnet,** daß die Injiziervorrichtung (20; 120; 220; 320) eine Sammelleitung in Form eines Ringrohres (134) oder eines Doppelplattenkanals (234) aufweist, von der zwei oder mehr, vorzugsweise senkrecht abstehende Kanülen (22; 122; 222; 322) ausgehen.

**Claims**

1. Process for reheating and/or complete baking of foodstuffs, especially of baking or grilling products, characterised in that a mixture of hot air and water vapour is introduced directly into the interior of the foodstuff before and/or during the heating up or baking.

2. Process according to claim 1, characterised in that the foodstuff is also exposed externally to a mixture of air or water vapour simultaneously with the introduction of the air-water vapour mixture or thereafter.

**3.** Process according to claim 1 or 2, characterised in that one so adjusts the ratio of water vapour to hot air that as much water vapour is introduced into the interior of the foodstuff as is lost by the heating.

**4.** Process according to one of the preceding claims, characterised in that one introduces into the foodstuff 0.5 to 5% of water, referred to the weight of the foodstuff to be heated.

**5.** Process according to one of the preceding claims, characterised in that one supplies the mixture of hot air and water vapour to the foodstuff in the form of a steam impact and subsequently heats the foodstuff.

**6.** Process according to one of claims 1 to 4, characterised in that one blows the mixture of hot air and water vapour into the foodstuff under pressure via nozzles.

**7.** Device for the reheating and/or complete baking of foodstuffs, consisting of a baking oven (1; 301) into the baking chamber (2: 302) of which can be introduced baking steam from a baking steam producer (6; 206; 406), characterised by a baking steam producer (6; 206; 406) which is constructed as continuous flow heater (10; 310) for water and includes a blower or compressor (16; 316) introducing air into the water-heating cycle and by an injection device (20; 120; 220; 320; 420) arranged in the baking chamber (2; 302) by means of which the baking steam can be introduced into the interior of a foodstuff.

**8.** Device according to claim 7, characterised in that to the baking steam producer (6) is attached a pipe (28) which opens into the baking chamber (2) parallel to the injection device (20) and that this pipe (28) and/or the injection device (20) has a regulating valve (30).

**9.** Device according to claim 7, characterised in that the baking steam producer (306) comprises a preheater (310) which produces steam and an after-heater (319) constructed as mixing chamber which increases the amount of air in the steam.

**10.** Device according to claim 9, characterised in that the preheater (310) is connected to a nozzle (315) opening into the mixing chamber (319).

**11.** Device according to claim 10, characterised in that the nozzle (315) is arranged in the air inlet path (323) of the mixing chamber (319).

**12.** Device according to claim 7, characterised in that the baking steam producer (406) is constructed as vessel (442) closable with a cover part (404), the inner chamber (446) of which is connected with a tube (422) held by the vessel (442) and projecting upwardly.

**13.** Device according to claim 12, characterised in that several baking steam producers (406) are held together in a frame.

**14.** Device according to one of claims 7 to 13, characterised in that the injection device (20; 120; 220; 320; 420) has at least one tube (22; 122; 222; 322; 422) with several sleeve openings (24; 124; 224; 324; 424), especially with several sleeve openings distributed in longitudinal direction.

**15.** Device according to one of claims 7 to 14, characterised in that the injection device (20; 120; 220; 320) comprises several tubes (22; 122; 222; 322), at least one of which is connected via a regulating valve to the baking steam producer (6; 306).

**16.** Device according to one of claims 7 to 14, characterised in that the injection device (20; 120; 220; 320) comprises a collecting pipe in the form of an annular tube (134) or of a double-plate channel (234) from which project two or more preferably vertically projecting tubes (22; 122; 222; 322).

## Revendications

**1.** Procédé pour réchauffer et/ou cuire des produits alimentaires, en particulier les produits cuits au four ou grillés, caractérisé en ce que l'on introduit directement avant et/ou pendant le réchauffage ou le recuit un mélange d'air chaud et de vapeur d'eau à l'intérieur du produit alimentaire.

**2.** Procédé selon la revendicaton 1, caractérisé en ce que les produits alimentaires sont soumis simultanément à l'introduction du mélange air-vapeur d'eau ou encore depuis l'extérieur à un mélange d'air chaud ou de vapeur d'eau.

**3.** Procédé selon la revendication 1 ou 2, caractérisé en ce que l'on ajuste le rapport entre la vapeur d'eau et l'air chaud pour amener à l'intérieur du produit alimentaire une quantité de vapeur d'eau égale à ce qu'il a perdu au moment du réchauffage.

**4.** Procédé selon l'une des revendications précédentes, caractérisé en ce que l'on introduit dans le produit alimentaire 0,5 jusqu'à 5 % d'eau, rapporté au poids du produit alimentaire à réchauffer.

**5.** Procédé selon l'une des revendications précédentes, caractérisé en ce que l'on introduit dans le produit alimentaire le mélange constitué par de l'air chaud et de la vapeur d'eau sous forme d'un jet de vapeur et en ce que l'on réchauffe ensuite le produit alimentaire.

**6.** Procédé selon l'une des revendications 1 à 4, caractérisé en ce que l'on insuffle le mélange d'air chaud et de vapeur d'eau dans le produit alimentaire sous pression au moyen de buses.

**7.** Dispositif pour réchauffer et/ou cuire des produits alimentaires, constitué par un four de cuisson (1 ; 301) à l'intérieur de l'espace de cuisson duquel (2 ; 302) on peut introduire des nappes de vapeur de cuisson provenant d'un générateur de vapeur, caractérisé par un générateur de nappes de vapeur de cuisson (6 ; 206 ; 406) qui est constitué par un chauffe-eau instantané (10 ; 310) et comprend une soufflante ou un compresseur (16 ; 316) introduisant l'eau dans le circuit de chauffage d'eau, et par un dispositif d'injection (20 ; 120 ; 220 ; 320 ; 420) agencé dans la zone de cuisson (2 ; 302) et au moyen duquel on peut introduire les nappes de vapeur de cuisson à l'intérieur d'un produit alimentaire.

**8.** Dispositif selon la revendication 7, caractérisé en ce que l'on raccorde une conduite (28) au générateur de nappes de vapeur de cuisson, conduite qui aboutit parallèlement au dispositif d'injection (20) dans la zone de cuisson (2) et en ce que cette conduite (28) et/ou le dispositif d'injection (20) comportent une soupape de régulation (30).

**9.** Dispositif selon la revendication 7, caractérisé en ce que le générateur de nappes de vapeur de cuisson (306) comprend un réchauffeur préliminaire (310) qui produit de la vapeur, et un surchauffeur (319) constitué sous forme de chambre de mélange et qui augmente la teneur en air de la vapeur.

**10.** Dispositif selon la revendication 9, caractérisé en ce que le réchauffeur préliminaire (310) est raccordé à une buse (315) aboutissant dans la chambre de mélange (319).

**11.** Dispositif selon la revendication 10, caractérisé en ce que la buse (315) est agencée dans le passage d'amenée d'air (323) de la chambre de mélange (319).

**12.** Dispositif selon la revendication 7, caractérisé en ce que le générateur de nappes de vapeur de cuisson (406) est agencé sous la forme d'un récipient (442) obturable par une partie de couvercle (404) et dont l'espace intérieur (446) est relié par une canule (422) faisant saillie vers le haut et maintenue par le récipient (442).

**13.** Dispositif selon la revendication 12, caractérisé en ce que plusieurs générateurs de nappes de vapeur de cuisson (406) sont assemblés dans un châssis.

**14.** Dispositif selon l'une des revendications 7 à 13, caractérisé en ce que le dispositif d'injection. (20 ; 120 ; 220 ; 320 ; 420) comporte au moins une canule (22 ; 122 ; 222 ; 322 ; 422) avec plusieurs ouvertures d'enveloppe (24 ; 124 ; 224 ; 324 ; 424) notamment avec plusieurs ouvertures d'enveloppe réparties dans le sens longitudinal.

**15.** Dispositif selon l'une des revendications 7 à 14, caractérisé en ce que le dispositif d'injection (20 ; 120 ; 220 ; 320) comprend plusieurs canules (22 ; 122 ; 222 ; 322) parmi lesquelles au moins une canule est raccordée au générateur de nappes de vapeur de cuisson (6 ; 306) par l'intermédiaire d'une soupape de régulation.

**16.** Dispositif selon l'une des revendications 7 à 14, caractérisé en ce que le dispositif d'injection (20 ; 120 ; 220 ; 320) présente un collecteur sous forme d'un tube circulaire (134) ou d'un canal à double plaques (234) à partir duquel partent deux ou plus de deux canules (22 ; 122 ; 222 ; 322) de préférence faisant saillie verticalement.

# FIG.1

# FIG.2

# FIG.3

# FIG. 4

# FIG.5

# FIG.6